# EUROPEAN PATENT APPLICATION

(11) **EP 1 857 353 A2**
(43) Date of publication of application: **21.11.2007**
(21) Application number: 07108438.8
(22) Date of filing: 18.05.2007
(51) Int. Cl.: B62D 65/06

(54) **Method of assembling a roof onto a vehicle**

(30) Priority: 19.05.2006 GB 0609956; 27.09.2006 GB 0618983
(71) Applicant: Nissan Motor Manufacturing (UK) Ltd., Cranfield, Bedfordshire MK43 0DB (GB)
(72) Inventor: Clark, Lindsay Nissan Motor Manufacturing (UK) Ltd., Moulsoe Road Cranfield, Bedfordshire MK43 0DB (GB); Young, Robin Nissan Motor Manufacturing (UK) Ltd., Moulsoe Road Cranfield, Bedfordshire MK43 0DB (GB)
(74) Representative: Hufton, Victoria Alice

(57) **Abstract**

A method of assembling a vehicle roof onto a vehicle body (14) is provided. The method comprises the steps of: mounting a mounting assembly (50) for a locator member (40) upon the vehicle body, mounting the locator member on the mounting assembly, mounting a part of the vehicle roof upon the locator member so that the vehicle roof is positioned correctly relative to the vehicle body, securing the part of the vehicle roof to the vehicle body, and removing the locator member and/or the mounting assembly from the vehicle without disturbing the vehicle roof.

## Description

The invention relates to a method of assembling a roof onto a vehicle. In particular, the invention relates to a method of assembling a roof onto a vehicle, where the roof is of the type that, when in use on the vehicle, is movable between open and closed positions. The invention also relates to an apparatus to assist with mounting of a vehicle roof on a vehicle.

Several different types of convertible vehicles are on the market with a retractable (movable) hard roof. This poses a challenge to vehicle manufacturers who need to devise a convenient and cost effective way of mounting the retractable roof onto the vehicle during the vehicle assembly process. It is a particular challenge to ensure that the retractable roof is mounted in exactly the correct position relative to the main vehicle body so that, for example, the roof forms the required seal to the main vehicle body and so that opening and closing operation of the roof, in use, is within tight tolerances.

A number of locator components are required to position the roof correctly on the main vehicle body, including a locator pin or bolt located rearward of the passenger seats on each side of the vehicle. During the assembly process, a jig is referenced to vehicle datum points and, once mounted on the vehicle, is used to set the correct locations for the locator components. In general, once the locator components are positioned correctly and fixed in place on the vehicle, brackets on the roof can be lowered over them so that the roof takes up its correct, fitted position, relative to the main vehicle body.

An existing locator pin, and the manner in which it is mounted to the vehicle, is illustrated in Figures 1 to 7. In practice, a locator pin is mounted on each side of the vehicle, although only one of the locator pins will be described here for simplicity.

As can be seen most clearly in Figures 1 and 2, the locator pin 10 includes an upper cylindrical pin body 10a, a lower screw threaded region 10b and a collar 10c. A bracket of a linkage mechanism for the roof 12 is received over the upper cylindrical body 10a of the locator pin 10 once it is fixed in the correct position on the vehicle body 15 (only a part of which is shown in Figure 2). A support plate 14 is mounted to the vehicle and includes a pin opening 16 through which the pin body 10a is received. The pin opening 16 has a relatively large diameter compared to the diameter of the pin body 10a. In Figure 3, the support plate 14 is shown *in situ* on the main vehicle body, but before the locator pin 10 has been introduced into the pin opening 16.

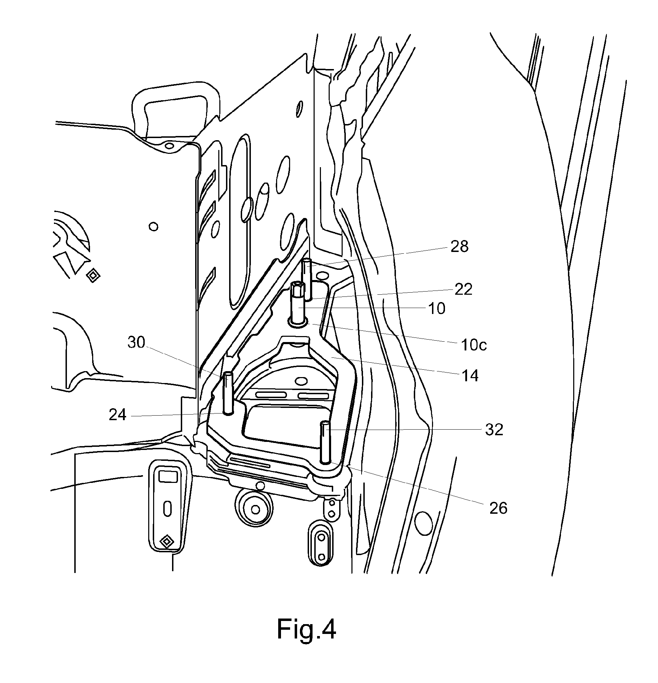

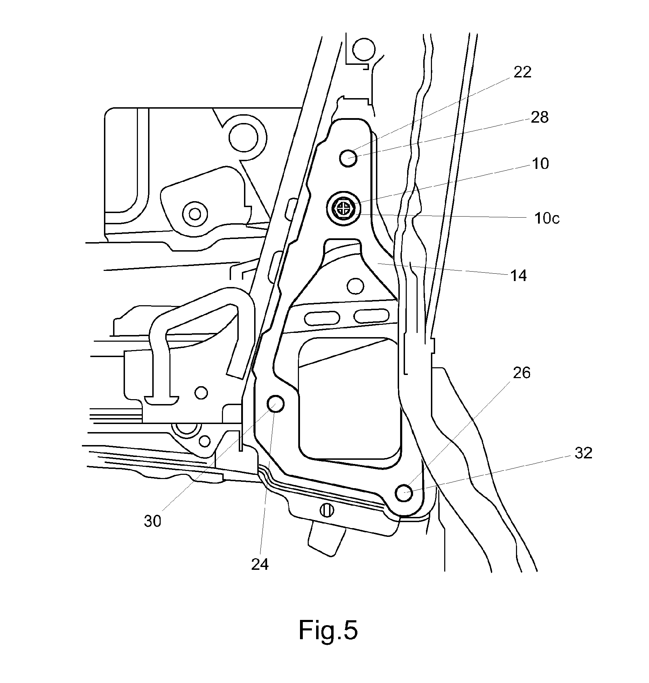

A centring plate 18 is located beneath the support plate 14, and includes a screw threaded bore 20. When the locator pin 10 is inserted through the opening 16 in the support plate 14 (as shown in Figures 4 and 5), the lower screw threaded region 10b is received within the screw threaded bore 20 of the centring plate 18. The locator pin 10 is screwed into the screw threaded bore 20 of the centring plate 18 until the shoulder 10c abuts the upper surface 14a of the support plate 14. The locator pin 10 is now fixed securely to the support plate and in the correct position for receiving the bracket 12 of the roof linkage mechanism.

The pin opening 16 in the support plate 14 has the enlarged diameter so as to permit a degree of play of the locator pin 10 within the opening 16, in all radial directions relative to its primary axis, depending on the required position of the pin 10 as determined by the jig. The shoulder 10c on the pin 10 prevents the pin from falling through the pin opening 16.

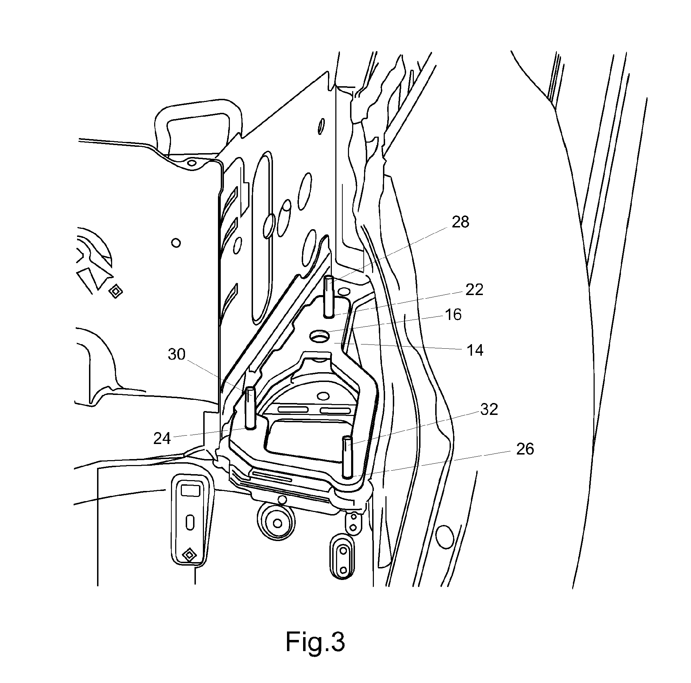

As can be seen in Figures 3 to 7, the support plate 14 includes first, second and third further openings 22, 24, 26 provided in a respective one of three corner locations of the support plate 14 and each of which receives a respective fixing bolt 28, 30, 32. Once the bracket 12 of the roof linkage mechanism has been received over the locator pin 10 and the fixing bolts 28, 30, 32 are inserted through the further openings 22, 24, 26 and a corresponding opening (not shown) in the roof bracket, to secure the roof bracket 12 to the plate 14. When the roof bracket 12 is secured in place, the locator pin 10 is trapped between the parts 12, 14 by virtue of the collar 10c which cannot pass through the opening 16.

It is an object of the present invention to provide an improved method of assembling a roof upon a vehicle body.

According to the present invention, there is provided a method of assembling a vehicle roof onto a vehicle body, comprising mounting a mounting assembly for a locator member upon a part of the vehicle body and subsequently mounting the locator member on the mounting assembly. A part of the vehicle roof is mounted upon the locator member so that the vehicle roof is positioned correctly relative to the vehicle body and the part of the vehicle roof is secured to the vehicle body. Once the vehicle roof has been secured to the vehicle body, the locator member and/or the mounting assembly is removed from the vehicle body, without disturbing the vehicle roof.

Preferably, the part of the vehicle roof is mounted upon the locator member by receiving the part of the vehicle roof over the locator member.

The invention provides a benefit over conventional methods for mounting vehicle roofs in that at least one of the mounting assembly and the locator member can be removed once the vehicle roof is fully assembled on the vehicle. Thus, the mounting assembly and/or the locator member can be re-used time and time again on the production line, thereby reducing overall vehicle part count and cost. For service purposes, garages and/or service centres may have a locator member and mounting assembly readily available so as to enable them to re-assemble a vehicle roof onto the vehicle body, using the method of the invention, once servicing and/or repair is complete.

The mounting assembly preferably includes a bracket having a bracket mouth for receiving the part of the vehicle body when the mounting assembly is mounted on the part of the vehicle body.

The mounting assembly may further include a mounting element including a screw threaded bore and the locator member may include a corresponding region of screw thread. Preferably, the method includes screwing the screw thread region of the locator member into the screw threaded bore to mount the locator member on the mounting assembly.
Preferably, the mounting element includes an enlarged head and a body. The mounting element body is received through an opening in a lower plate of the mounting bracket, but the enlarged head does not fit through the opening so that the mounting element cannot fall through said opening.

This provides the further advantage that the person assembling the vehicle roof onto the vehicle does not have to support the mounting element with one hand while the locator member is being manoeuvred into position because the mounting element is self-supported on the lower plate by means of its enlarged head.

In a further preferred embodiment, the mounting bracket includes an upper plate, the part of the vehicle body and the part of the roof defining a clearance therebetween for receiving the upper plate prior to the removal of the mounting bracket from the vehicle body.

The upper plate is preferably provided with an opening for receiving the locator member. Thus, the method preferably includes inserting the locator member through the opening in the upper plate and into the aligned screw threaded bore of the mounting element.

The method preferably includes receiving the locator member through an opening in the part of the vehicle body and through an opening in the upper plate so as to mount the locator member on the mounting assembly.

Preferably, the method includes securing the part of the vehicle roof to the part of the vehicle body by means of at least one fixing member (e.g. a bolt or rivet) which passes through the part of the vehicle and the part of the vehicle body.

In a particularly preferred embodiment, the method includes removing the locator member from the mounting assembly, prior to removing the mounting assembly from the part of the vehicle body. The locator member is preferably removed from the mounting assembly by unscrewing the locator member from the screw threaded bore.

In a further preferred embodiment, the method includes mounting the mounting assembly to a support plate of the vehicle body. The support plate is that part of the vehicle to which a vehicle roof is mounted in a conventional vehicle. Typically, one support plate resides on one side of the vehicle and another support plate resides on the other side of the vehicle, both plates being in fixed connection with the vehicle body.

The part of the vehicle roof which is mounted upon the locator member typically takes the form of a bracket or flange of a roof linkage mechanism for the roof.

The mounting assembly need not include a bracket, as described previously, whilst still having a mounting element including a screw threaded bore. In this case the method preferably comprises screwing a screw threaded region of the locator member into the screw threaded bore of the mounting element to mount the locator member on the mounting assembly.

In other embodiments, with or without a mounting bracket, the mounting element need not be a screw-threaded component but may, for example, include some other means for clamping, gripping, fastening or otherwise attaching the locator member to the mounting element.

According to a second aspect of the invention, there is provided an apparatus to assist mounting of a vehicle roof to a part of a vehicle body, the apparatus comprising a mounting assembly, and a locator member for mounting on the mounting assembly, to which a part of the vehicle roof is mounted to correctly position the vehicle roof relative to the vehicle body. The mounting assembly includes a bracket which is removable from the vehicle body once the locator member has been mounted to the mounting assembly.

Preferred and/or optional features of the first aspect of the invention may be incorporated alone or in appropriate combination within the second aspect of the invention also.

The background to the invention has already been described with reference to the following drawings, in which:

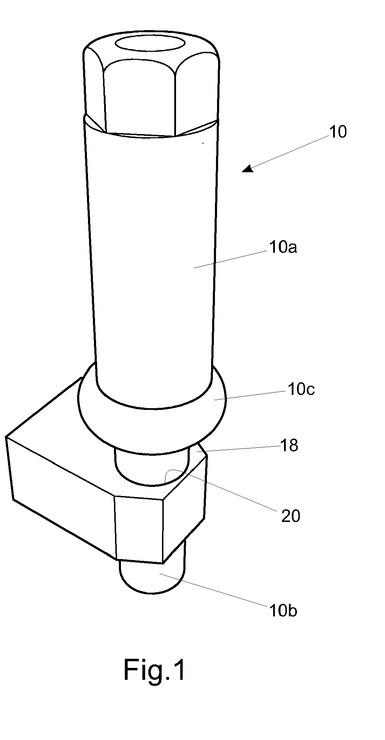

Figure 1 is a perspective view of a locator pin of a conventional roof assembly,

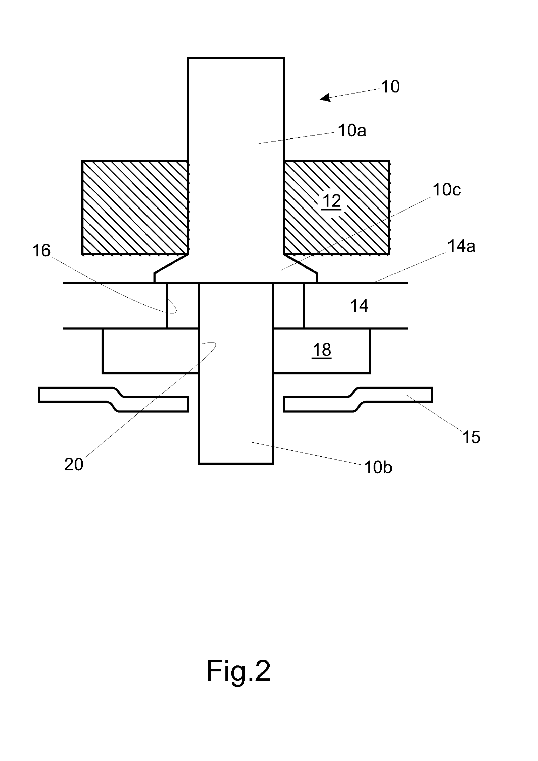

Figure 2 is a section view of the locator pin in Figure 1,
Figure 3 is a perspective view of a part of a conventional roof assembly before the locator pin is in place,
Figure 4 is a similar view of the roof assembly to that shown in Figure 3, with the locator pin in place,
Figure 5 is a top view of the roof assembly in Figure 4, with the locator pin in place,

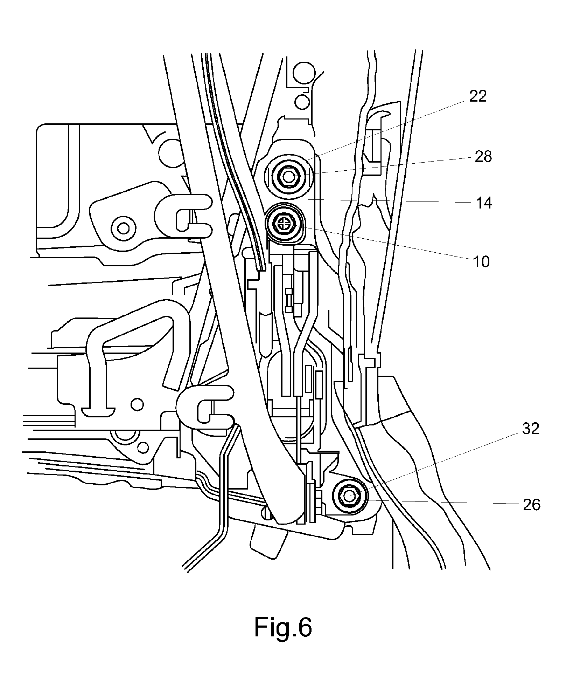

Figure 6 is a perspective view of the roof assembly in Figures 4 and 5, with a bracket of a roof linkage mechanism mounted over the locator pin,

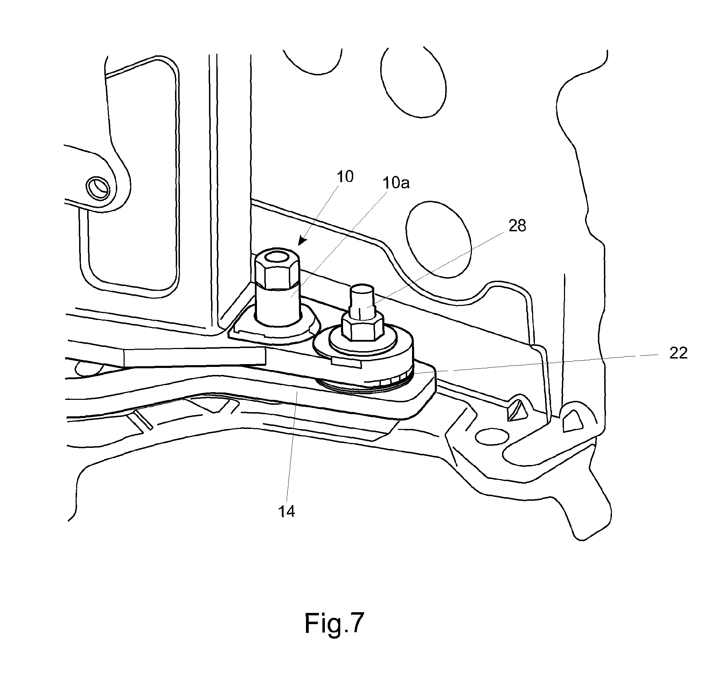

Figure 7 is a perspective view of a part of the roof assembly in Figure 6 to illustrate more clearly the roof linkage bracket mounted over the locator pin.

The invention will be described, by way of example only, with reference to the following drawings in which:

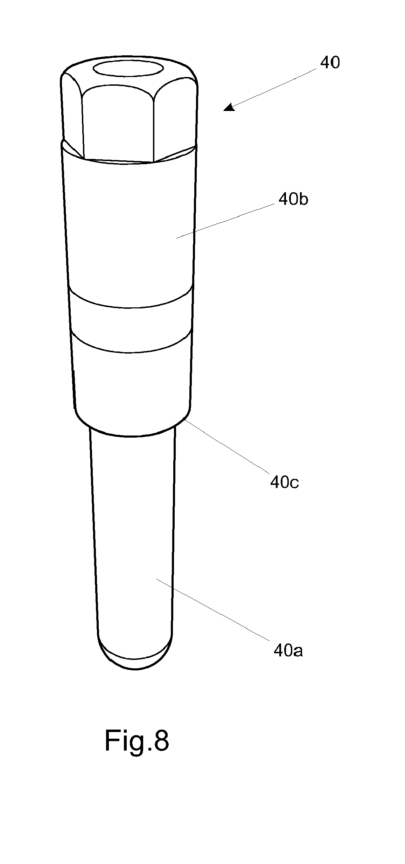

Figure 8 is a perspective view of a locator pin for use in a method of the present invention,

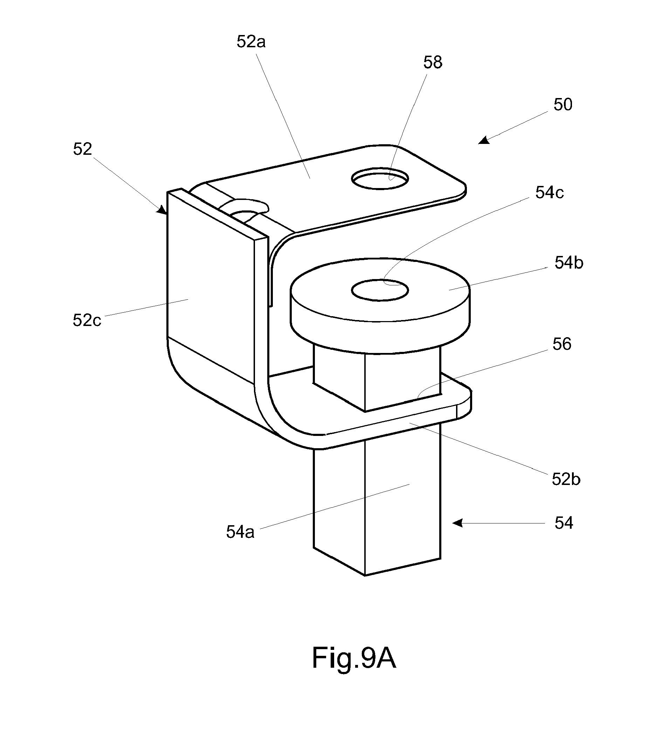

Figure 9a is a perspective view of one example of a part of a mounting assembly for the locator pin in Figure 8,

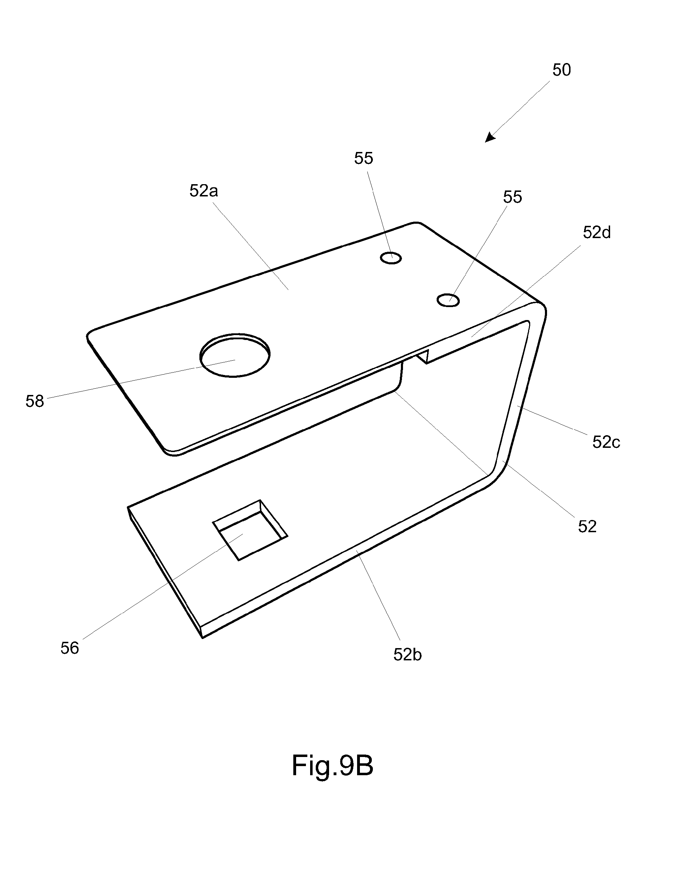

Figure 9b is a perspective view of an alternative example of the part of a mounting assembly for the locator pin in Figure 9a,

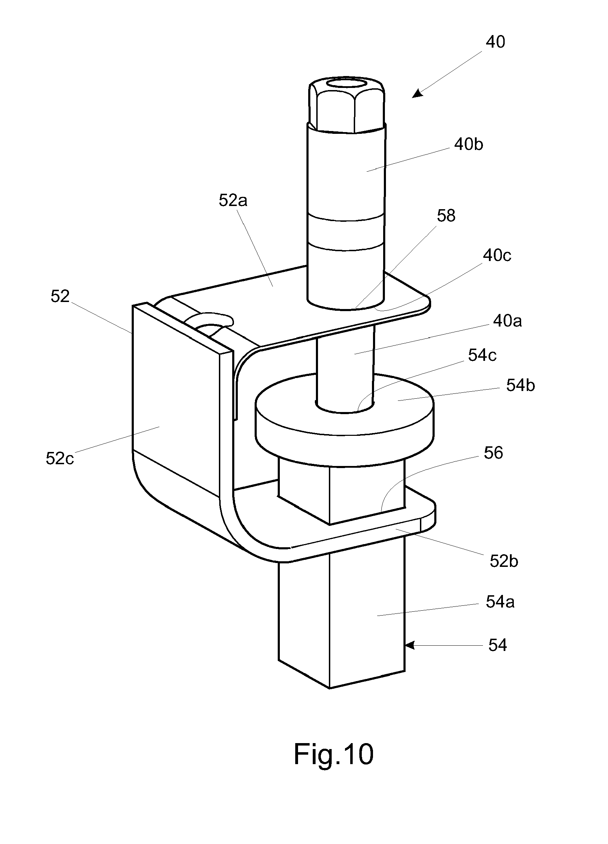

Figure 10 is a perspective view of the locator pin in Figure 8 and the mounting assembly in Figure 9a when assembled together,

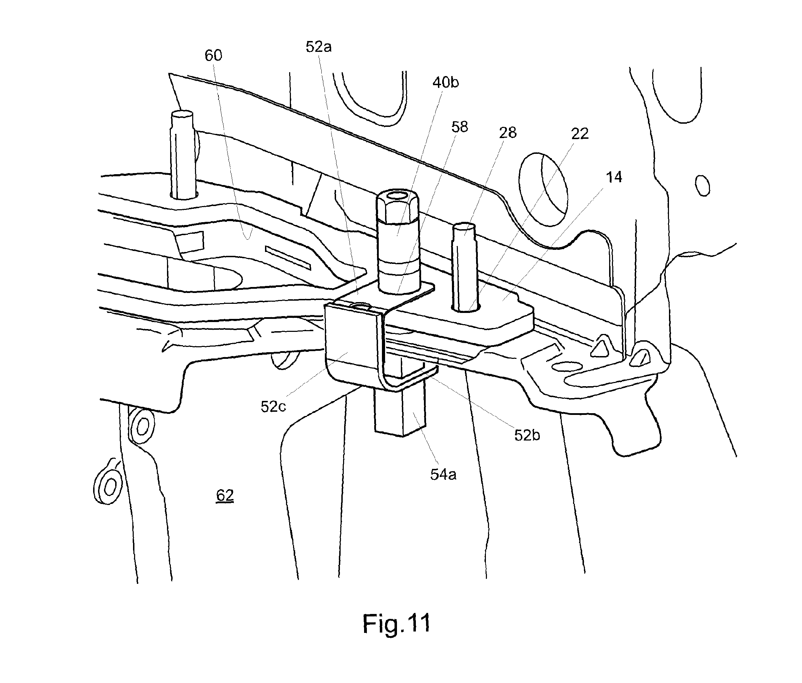

Figure 11 is a perspective view of the locator pin/mounting assembly in Figure 10 when assembled onto a support plate on the vehicle body,

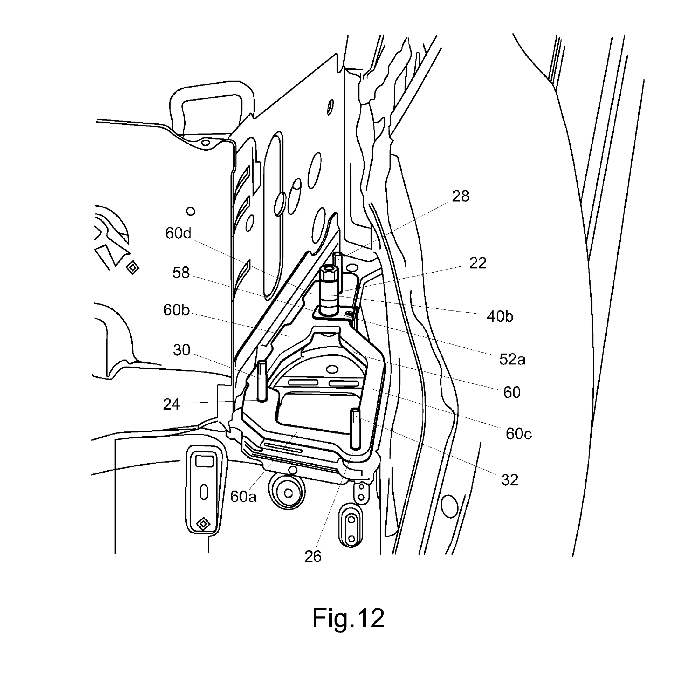

Figure 12 is an alternative perspective view of the locator pin/mounting assembly in Figure 11,

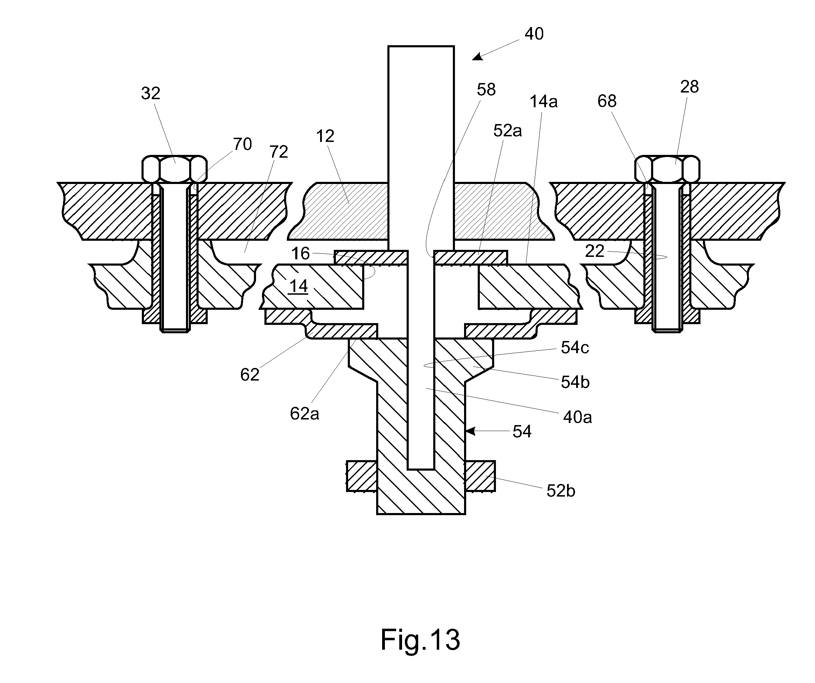

Figure 13 is a side view of a part of the locator pin/mounting assembly in Figures 11 and 12, with a bracket of a roof linkage mechanism for the roof mounted on the locator pin,

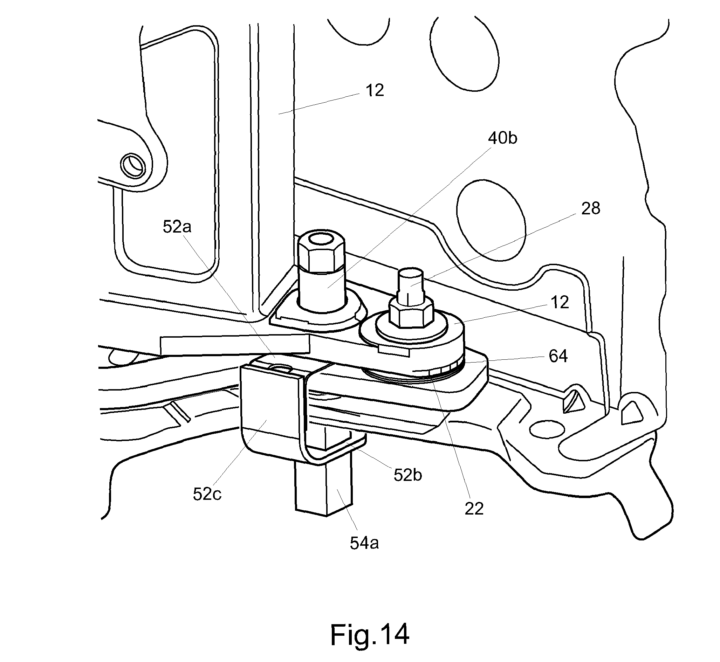

Figure 14 is a perspective view of the locator pin/mounting assembly in Figure 13, including the bracket of the roof linkage mechanism, and

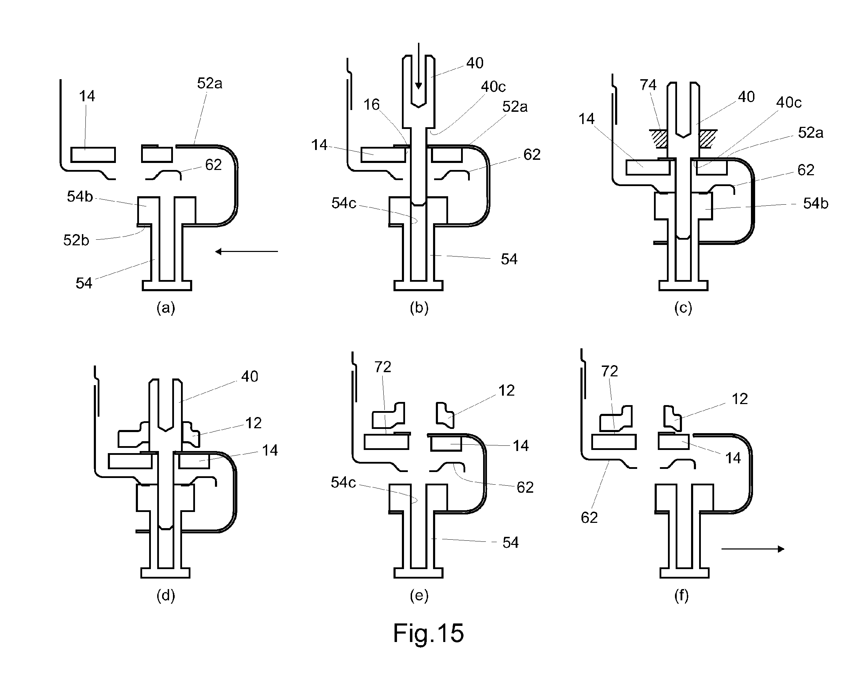

Figures 15(a) to (f) is a series of diagrams to illustrate the sequence of steps of the assembly method of the present invention, utilising the locator pin/mounting assembly in Figures 8 to 14.

Where similar parts to those shown in Figures 1 to 7 are included in the following Figures, like reference numerals will be used.

Referring to Figure 8, the method of the present invention utilises a locator member in the form of a pin, referred to generally as 40, including a lower, screw threaded region 40a and an upper, cylindrical body 40b. The cylindrical body 40b is of enlarged diameter compared to the screw threaded region 40a and defines, on its underside, a pin engagement surface 40c.

Referring to Figure 9a, the locator pin 40 is mounted onto the vehicle body in the desired location by means a mounting assembly, referred to generally as 50, including a generally G-shaped mounting bracket 52 and a mounting element in the form of a boss 54. The mounting bracket 52 includes an upper plate 52a and a lower plate 52b which are interconnected by means of a side plate 52c. The lower plate 52b and the side plate 52c are integrally formed and the side plate 52c is attached to the upper plate 52a by means of one or more suitable fixings (not shown).

Figure 9b shows an alternative embodiment of the mounting assembly 50 shown in Figure 9a. The example shown in Figure 9b differs from that shown in Figure 9a in that the side plate 52c includes an upper extension 52d. The upper extension 52d is integrally formed with the side plate 52c so that it is arranged to be substantially perpendicularly to the side plate 52c. As a result, the lower plate 52b, side plate 52c and the upper extension 52d form an asymmetrical U-shaped portion of the generally G-shaped mounting bracket 52. As a result of the provision of the upper extension 52d, the upper plate 52a is a flat structure. The upper plate 52a is attached to the upper extension 52d using fixings 55 in the form of two spot-welds. This example is more economical to manufacture than the example shown in Figure 9a as the upper plate 52a does not require shaping, thus reducing the number of manufacturing steps required.

The lower plate 52b of the mounting bracket 52 is provided with an opening 56 having a square periphery and the upper plate 52a is provide with an opening 58 having a circular periphery. The boss 54 includes a lower, square-section body 54a a circular head 54b, the square-section body 54a being received through the square opening 56 in the lower plate 52b of the bracket 52. A cylindrical, screw threaded bore 54c extends through the head 54b and the body 54a of the boss 54.

Referring to Figure 10, in order to mount the locator pin 40 to the vehicle body, the pin 40 is received through the opening 58 in the upper plate 52a of the mounting bracket 52 and into the bore 54c of the boss 54. As the locator pin 40 is screwed into the bore 54c of the boss 54, the boss 54 and the locator pin 40 are drawn towards one another and the parts 40, 52, 54 are secured together.

Referring to Figures 11 to 14, the locator pin 40 and mounting assembly 50 are mounted to a support plate 14 of the vehicle body 62, of the type known in the prior art and as shown in Figures 1 to 7. The support plate 14 has a similar form to that described previously and includes a pin opening (not visible in Figure 11) for receiving the locator pin 40. The support plate 14 further includes a large central opening 60 which is bounded by a base rung 60a, left and right side rungs 60b, 60c respectively, and a neck 60d. First, second and third further openings 22, 24, 26 are provided in the support plate 14, the first further opening 22 in the neck 60d and the second and third further openings 24, 26 in a corner region of intersection between one of the side rungs and the base rung (i.e. the corner regions between 60b, 60a and between 60c, 60a). The further openings 22, 24, 26 are for receiving fixing bolts 28, 30, 32, respectively, when the roof is assembled onto the locator pin 40.

As seen particularly in Figures 11 and 12, with the locator pin 40 and the mounting assembly 52 mounted onto the support plate 14, a mouth of the mounting bracket 52 is received over the support plate 14 so that the upper plate 52a of the bracket 52 rests on the upper surface 14a of the support plate 14. The threaded bore 54c through the boss 54 aligns with the pin opening 16 in the support plate 14. The locator pin 40 passes through the opening 58 in the upper plate 52a of the bracket 52 and through the pin opening 16 in the support plate 14 so that the screw threaded region 40a of the pin 40 is received within the screw threaded bore 54c of the boss 54.

Referring to Figures 13 and 14, once the locator pin 40 has been fully tightened into the threaded bore 54c of the boss 54 by screwing, the head 54b of the boss 54 is brought into abutment with a surface 62a of the vehicle body 62 so that the locator pin 40 and mounting assembly 50 are securely fixed together and to the vehicle body 62. With the locator pin 40 in the correct position in the pin opening 16, the roof assembly can be introduced onto the vehicle, using the locator pin 40 to position it correctly.

The roof includes a roof linkage mechanism which is operable to allow the roof to be moved between a closed position, in which it covers the vehicle cabin, and an open position in which it is retracted from the cabin for storage within the vehicle boot space. The linkage mechanism includes a linkage bearing 66 which has a flange or bracket 12 provided with an opening 64 which is received over the locator pin 40.

The roof bracket 12 is also provided with a plurality of further openings (only two of which, 68, 70, are shown in Figure 13) which align with a respective one of the further openings 22, 24, 26 in the support plate 14. Once the opening 64 of the roof bracket 12 has been received over the locator pin 40, fixing bolts are inserted through the further openings 68, 70 in the roof bracket and through the corresponding further openings 22, 24, 26 in the support plate 14 to securely fasten the roof bracket 12 to the support plate 14 in the correct alignment with the vehicle body 62.

The upper surface 14a of the support plate 14 is shaped to have a recess 72, surrounding the pin opening 64, which defines a clearance with the lower surface of the roof bracket 12 (as can be seen most clearly in Figure 13). The clearance is of sufficient depth to accommodate the thickness of the upper plate 52a of the mounting bracket 52.

In a modification to the embodiment shown in Figure 13, the upper surface 14a of the support plate 14 may be substantially flat and the underside of the roof bracket (i.e. the surface of the roof bracket 12 which faces the upper surface of the support plate 14) may be provided with a recess to define a suitable clearance for receiving the upper plate 52a of the mounting bracket 52.

The sequence of method steps that are used to mount firstly the locator pin/mounting assembly 40, 50 and secondly the roof bracket 12 to the vehicle body 62 will now be described in further detail with reference to Figures 15 (a) to (f).

Referring to Figure 15(a), initially, the boss 54 is inserted through the square opening in the lower plate 52b of the mounting bracket 52 so that the head 54b of the boss 54 rests on the upper surface of the lower plate 52b. The mouth of the mounting bracket 52 is introduced (in the direction of the arrow) over the support plate 14. Referring to Figure 15(b), the bracket 52 is moved into the position in which the upper plate 52a of the bracket rests upon the upper surface 14a of the support plate 14, with the screw threaded bore 54c in the boss 54 aligned beneath the pin opening 16 in the support plate 14. The locator pin 40 is then introduced through the opening 58 in the upper plate 52a and the pin opening 16 in the support plate 14 and is loosely fitted into the screw threaded bore 54c in the mounting element 54.

Once the locator pin 40 has been held loosely in place, a jig 74 is referenced to vehicle datum points and is used to set the correct location for the locator pin 40 within the pin opening 16 in the support plate 14. Once in the correct position, as determined by the jig 74, the locator pin 40 is screwed tightly into the bore 54c (Figure 15(c)) until the pin engagement surface 40c abuts the upper surface of the upper plate 52a and the upper surface of the head 54b of the boss 54 engages with the surface 62a of the vehicle body 62. Once in this position, the locator pin 40 and the mounting assembly 50 are secured firmly together.

It is advantageous that during this stage of the assembly process the mounting bracket 50 and the boss 54 are self-supported, by virtue of the cooperation between the mounting bracket 52 and the support plate 14, and so the person assembling the roof assembly does not have to hold the mounting bracket 52 in position in order to screw in the locator pin 40.

The jig 74 is removed once the locator pin 40 has been secured firmly to the mounting assembly 50. Referring to Figure 15(d), the bracket 12 of the roof linkage mechanism is introduced over the locator pin 40 so that it rests upon the upper surface of the support plate 14 and the upper plate 52a of the mounting bracket 52. The fixing bolts (not illustrated in Figure 15) are then passed through the aligned openings in the roof bracket 12 and the support plate 14 to secure the roof bracket 12 in the correct position.

Referring to Figure 15(e), once the roof bracket 12 is in place and secured to the support plate 14, the locator pin 40 can be removed from the final assembly by unscrewing the pin 40 from the screw threaded bore 54c of the boss 54, without disrupting the roof bracket 12.

Referring to Figure 15(f), the mounting bracket 52 is also removed from the final assembly by sliding the upper plate 52a out from between the roof bracket 12 and the support plate 14. It is possible to remove the mounting bracket 52 from the final assembly by virtue of the clearance 72 defined between the lower surface of the roof bracket 12 and the upper surface of the support plate 14. With both the locator pin 40 and the mounting bracket 52 removed from the assembly, the roof bracket 12 remains securely fixed to the support plate 14, and in the correct alignment with the vehicle, by means of the fixing bolts (not shown). The invention provides a significant advantage over conventional methods in that the locator pin 40 and the mounting assembly 50 can be re-used, time and time again, for the mounting of a roof assembly in subsequent vehicles on the production line. As the locator pin and mounting assembly components 40, 50 are not fixed to the vehicle at the end of the production line, overall vehicle part count and, hence, cost is reduced.

## Claims

1. A method of assembling a vehicle roof onto a vehicle body (14), the method comprising:
mounting a mounting assembly (50) for a locator member (40) upon the vehicle body (14),
mounting the locator member (40) on the mounting assembly (50),
mounting a part (12) of the vehicle roof upon the locator member (40) so that the vehicle roof is positioned correctly relative to the vehicle body (14),
securing the part (12) of the vehicle roof to the vehicle body (62), and
removing the locator member (40) and/or the mounting assembly (50) from the vehicle without disturbing the vehicle roof (14).

2. The method as claimed in claim 1, wherein mounting the part (12) of the vehicle roof upon the locator member (40) includes receiving the part (12) of the vehicle roof over the locator member (40).

3. The method as claimed in claim 1 or claim 2, wherein the mounting assembly (50) includes a mounting bracket (52) having a bracket mouth for receiving a part of the vehicle body (14) when the mounting assembly (50) is mounted on the vehicle body (14).

4. The method as claimed in claim 3, wherein the mounting assembly (50) includes a mounting element (54) having means for attaching or securing the locator member (40) to the mounting element (54).

5. The method as claimed in claim 4, wherein the locator member (40) includes a region (40a) of screw thread and the mounting element (54) includes a cooperable region (54c) of screw thread, the method including engaging the screw threaded region (40a) of the locator member (40) with the cooperable region of screw thread (54c) of the mounting element (54) to mount the locator member (40) on the mounting assembly (50).

6. The method as claimed in claim 4 or claim 5, wherein the mounting element (54) is received through an opening (56) in a lower plate (52b) of the mounting bracket (52).

7. The method as claimed in claim 6, wherein the mounting element (54) includes a body (54a) and an enlarged head (54b) so that, when the body (54a) of the mounting element (54) is received through the opening (56) in the lower plate (52b), the enlarged head (54b) prevents the mounting element (54) from falling through said opening (56).

8. The method as claimed in claim 6 or claim 7, wherein the mounting bracket (52) includes an upper plate (52a), the vehicle body (14) and the part (12) of the roof defining a clearance (72) therebetween which receives the upper plate (52a), prior to the removal of the mounting bracket (52) from the vehicle body (14).

9. The method as claimed in claim 8, including receiving the locator member (40) through both an opening (16) in the vehicle body (14) and an opening (58) in the upper plate (52a) so as to mount the locator member (40) on the mounting assembly (50).

10. The method as claimed in claim 1, wherein the mounting assembly (50) includes a mounting element (54) having means for attaching or securing the locator member (40) to the mounting element (54).

11. The method as claimed in claim 10, wherein the locator member (40) includes a region (40a) of screw thread and the mounting element (54) includes a cooperable region (54c) of screw thread, the method including engaging the screw threaded region (40a) of the locator member (40) with the cooperable region of screw thread (54c) of the mounting element (54) to mount the locator member (40) on the mounting assembly (50).

12. The method as claimed in any one of claims 1 to 11, including securing the part (12) of the vehicle roof to the vehicle body (14) by means of at least one fixing member (28, 30, 32) which passes through the part (12) of the vehicle roof and the vehicle body (14).

13. The method as claimed in claim 12, wherein the fixing member is a bolt or a rivet (28, 30, 32).

14. The method as claimed in any one of claims 1 to 13, including removing the locator member (40) from the vehicle body (14) prior to removing the mounting assembly (50) from the vehicle body (14).

15. The method as claimed in any one of claims 1 to 14, including mounting the mounting assembly (15) to a support plate (14) of the vehicle body.

16. Apparatus to assist mounting of a vehicle roof to a vehicle body (14), the apparatus comprising;
a mounting assembly (50), and
a locator member (40), mounted on the mounting assembly (50), to which a part (12) of the vehicle roof is mounted to correctly position the vehicle roof relative to the vehicle body (14),
wherein, once the vehicle roof has been mounted to the vehicle body (14), at least one of the mounting assembly (50) and the locator member (40) is removable from the vehicle body (14) without disrupting the vehicle roof.
